# EUROPÄISCHE PATENTSCHRIFT

(11) **EP 1 583 783 B1**
(45) Veröffentlichungstag und Bekanntmachung des Hinweises auf die Patenterteilung: **04.07.2007**
(21) Anmeldenummer: 03795966.5
(22) Anmeldetag: 24.12.2003
(51) Int. Cl.: C08F 257/02, C08F 236/04, C08F 212/08

(54) **VERFAHREN ZUR HERSTELLUNG STABILER WÄSSRIGER POLYMERISATDISPERSIONEN AUF BASIS VON KONJUGIERTEN ALIPHATISCHEN DIENEN UND VINYLAROMATISCHEN VERBINDUNGEN**
METHOD FOR PRODUCING STABLE AQUEOUS POLYMER DISPERSIONS BASED ON CONJUGATED ALIPHATIC DIENES AND VINYL AROMATIC COMPOUNDS
PROCEDE DE PRODUCTION DE DISPERSIONS DE POLYMERISAT AQUEUSES STABLES A BASE DE DIENES ALIPHATIQUES CONJUGUES ET DE COMPOSES VINYLAROMATIQUES

(30) Priorität: 07.01.2003 DE 10300460
(43) Veröffentlichungstag der Anmeldung: 12.10.2005
(73) Patentinhaber: BASF Aktiengesellschaft, 67056 Ludwigshafen (DE)
(72) Erfinder: SCHMIDT-THÜMMES, Jürgen, 67141 Neuhofen (DE); HARTMANN, Jürgen, 67227 Frankenthal (DE); TSCHANG, Chung-Ji, 67098 Bad Dürkheim (DE)
(86) Internationale Anmeldenummer: PCT/EP2003/014873
(87) Internationale Veröffentlichungsnummer: WO 2004/060943

(56) Entgegenhaltungen:
- GB-A- 1 498 128
- US-A- 3 875 101
- US-A- 5 910 534
- US-B1- 6 365 647

## Beschreibung

Gegenstand der vorliegenden Erfindung ist ein Verfahren zur Herstellung einer stabilen wässrigen Copolymerisatdispersion durch radikalisch initiierte wässrige Emulsionspolymerisation von

| | |
|---|---|
| a) 19,9 bis 80 Gew.-Teilen | konjugierter aliphatischer Diene |
| | [Monomere a)], |
| b) 19,9 bis 80 Gew.-Teilen | vinylaromatischer Verbindungen |
| | [Monomere b)], |
| c) 0,1 bis 10 Gew.-Teilen | ethylenisch ungesättigter Carbonsäuren |
| | und/oder Dicarbonsäuren [Monomere c)], |
| d) 0 bis 20 Gew.-Teilen | ethylenisch ungesättigter Carbonsäurenitrile |
| | [Monomere d)] |

sowie

| | |
|---|---|
| e) 0 bis 20 Gew.-Teilen | sich von Monomeren b) unterscheidenden copolymerisierbarer Verbindungen |
| | [Monomere e)], |

wobei die Gesamtmenge der ethylenisch ungesättigten Monomeren a) bis e) 100 Gew.-Teile beträgt, in Gegenwart von Wasser und 0,1 bis 5 Gew.-Teilen Emulgatoren, bezogen auf die Gesamtmonomerenmenge, wobei als Emulgatoren
f) Schwefelsäurehalbester ethoxylierter Fettsäurealkohole und/oder
g) Salze von Estern und Halbestern von Alkylpolyoxyethylensulfosuccinaten
eingesetzt werden, wobei 15 bis 85 Gew.-% der insgesamt eingesetzten Emulgatoren innerhalb der Zeit zugegeben werden, in der bis zu 40 % des Gesamtumsatzes der Monomeren a) bis e) erreicht ist, und wobei 1 bis 50 % der der Monomeren c) zugrundeliegenden Carbonsäuregruppen durch Zusatz von Base neutralisiert werden, dadurch gekennzeichnet, dass die Teilneutralisation der Monomeren c) vor der Polymerisation erfolgt.

EP-B 819708 offenbart wässrige Copolymerisatdispersionen auf Basis von konjugierten aliphatischen Dienen und vinylaromatischen Verbindungen, welche eine gute Stabilität gegenüber mehrwertigen Ionen, beispielsweise Kalzium-lonen, besonders bei hohen Temperaturen und unter Einwirkung von Scherkräften aufweisen sowie ein Verfahren zu ihrer Herstellung. Kennzeichnend für das Herstellverfahren ist, dass spezielle Emulgatoren verwendet und diese dem Polymerisationsgemisch nach einem definierten Zugabeprofil zugegeben werden sowie eine Teilneutralisation der ebenfalls einpolymerisierten ethylenisch ungesättigten Mono- und/oder Dicarbonsäuren während der Polymerisationsreaktion erfolgt. Nachteilig an diesem Verfahren ist, dass die erhaltenen Copolymeriatdispersionen Koagulatgehalte aufweisen, welche die Anwendung der wässrigen Copolymerisatdispersionen in verschiedenen Anwendungsgebieten stören und daher in kosten- und zeitaufwendigen Filtrationen abgetrennt werden müssen.

Aufgabe der vorliegenden Erfindung war die Bereitstellung eines verbesserten Herstellverfahrens für wässrige Copolymerisatdispersionen auf Basis von konjugierten aliphatischen Dienen und vinylaromatischen Verbindungen, welches entsprechende wässrige Copolymerisatdispersionen mit niedrigeren Koagulatgehalten zur Verfügung stellt.

Überraschenderweise wurde nun gefunden, dass die Aufgabe durch das eingangs definierte Verfahren gelöst wird.

Im erfindungsgemäßen Verfahren werden zur Herstellung der wässrigen Copolymerisatdispersionen häufig

| | |
|---|---|
| 25 bis 70 Gew.-Teile | Monomere a), |
| 25 bis 70 Gew.-Teile | Monomere b), |
| 0,1 bis 8 Gew.-Teile | Monomere c), |
| 0 bis 15 Gew.-Teile | Monomere d) sowie |
| 0 bis 15 Gew.-Teile | Monomere e) |

und oft

| | |
|---|---|
| 25 bis 60 Gew.-Teile | Monomere a), |
| 25 bis 70 Gew.-Teile | Monomere b), |
| 1 bis 5 Gew.-Teile | Monomere c), |
| 0 bis 10 Gew.-Teile | Monomere d) sowie |
| 0 bis 10 Gew.-Teile | Monomere e) |

eingesetzt.

Als konjugierte aliphatische Diene [Monomere a)] kommen bevorzugt Butadien, Isopren, Pentadien-1,3, Dimethylbutadien und/oder Cyclopentadien in Frage. Als vinylaromatische Verbindungen [Monomere b)] werden insbesondere genannt Styrol, α-Methylstyrol und/oder Vinyltoluol. Als ethylenisch ungesättigte Carbonsäuren und/oder Dicarbonsäuren [Monomere c)] werden bevorzugt eingesetzt 3 bis 6 C-Atome aufweisende α,β-monoethylenisch ungesättigte Mono- und Dicarbonsäuren wie z.B. Acrylsäure, Methacrylsäure, Maleinsäure, Fumarsäure, Itaconsäure. Bevorzugt werden als ethylenisch ungesättigte Carbonsäurenitrile genannt Acrylnitril und/oder Methacrylnitril [Monomere d)] und als copolymerisierbare Vinylverbindungen [Monomere e)], Ester der Acryl- und/oder Methacrylsäure, in denen die Alkylgruppe 22 oder weniger Kohlenstoffatome enthält, beispielsweise Methyl(meth)acrylat, Ethyl(meth)acrylat, Isopropyl(meth)acrylat, Butyl(meth)acrylat, 2-Ethylhexyl(meth)acrylat sowie Allylester gesättigter Monocarbonsäuren, Vinylester, Vinylether, Vinylketone, Dialkylester ungesättigter Dicarbonsäuren, Vinylacetat und/oder Vinylpyridin, Vinylchlorid, Vinylidenchlorid.

Die Emulgatoren werden erfindungsgemäß bevorzugt in Mengen von 0,2 bis 4,5 Gew.-Teilen, bezogen auf 100 Gew.-Teile der obengenannten Monomere a) bis e), eingesetzt. Als Emulgatoren eignen sich erfindungsgemäß insbesondere Schwefelsäurehalbester ethoxylierter Fettalkohole, die aus einem geradkettigen oder verzweigten Alkylrest mit 8 bis 18 Kohlenstoffatomen bestehen, der über eine Ethergruppe mit einer Poly- oder Oligoethylenoxysequenz verknüpft ist und deren Endgruppen aus einem Sulfatrest bestehen. Als Poly- oder Oligoethylenoxysequenzen kommen dabei Ethylenoxidoligomere in Frage mit einem Polymerisationsgrad von 2 bis 30 Ethylenoxideinheiten, bevorzugt 2 bis 7 Ethylenoxideinheiten.

Besonders bevorzugt werden als Fettalkoholethersulfate solche genannt, die als Fettalkohol einen C₈-C₁₈-Alkylrest enthalten, z.B. Capryl-, Caprin-, Lauryl-, Myristyl-, Olein- oder Elaidinalkohol. Besonders bevorzugt sind Lauryloligoethylenoxysulfat, Palmityloligoethylenoxysulfat, Stearyloligoethylenoxysulfat und Oleyoligoethylenoxysulfat, wobei die Oligoethylenoxysequenz besonders bevorzugt aus 2 bis 7 Ethylenoxideinheiten besteht.

Als Fettalkohol kann dabei sowohl die reine Ausgangsverbindung oder aber auch die häufig bei den synthetischen Fettalkoholen anfallenden Gemische homologer und isomerer Alkylreste, z.B. ein Gemisch aus C₁₂- und C₁₃-Fettalkoholen eingesetzt werden. Typischerweise drückt der Ethoxylierungsgrad nur den Mittelwert einer Verteilung aus.

Die freie Säuregruppe des Sulfatrestes liegt üblicherweise neutralisiert als Ammonium- oder Alkalimetallsalz vor, die Neutralisation kann aber auch während der Dosierung durch die eingesetzte Base erfolgen.

Weiterhin können erfindungsgemäß als Emulgatoren Ester oder Halbester von Alkylpolyoxyethylensulfosuccinaten eingesetzt werden. Dabei ist die Sulfobernsteinsäure einfach oder doppelt mit Poly- oder Oligoethylenoxid mit 2 bis 30 Ethylenoxideinheiten, bevorzugt 2 bis 7 Ethylenoxideinheiten, insbesondere 2 bis 5 Ethylenoxideinheiten verestert, wobei die Endgruppe der genannten Ester und Halbester aus einem Alkylrest mit 8 bis 18 Kohlenstoffatomen bestehen, der geradkettig oder verzweigt ist. Als C₈-C₁₈-Kohlenstoff enthaltende Alkylreste werden insbesondere genannt: Capryl-, Caprin-, Lauryl-, Myristyl-, Stearyl- und Elaidinalkohol.

Die radikalisch wässrige Emulsionspolymerisation wird in einer dem Fachmann bekannten Weise durch wasserlösliche Radikalinitiatoren initiiert. Genannt werden insbesondere organische und/oder anorganische Peroxide, wie z.B. Alkalimetallperoxodisulfate und/oder Azoverbindungen oder kombinierte Systeme, die aus wenigstens einem Reduktionsmittel und wenigstens einem Peroxid und/oder Hydroperoxid zusammengesetzt sind, wie z.B. tert.-Butylhydroperoxid und das Natriumsalz der Hydroxymethansulfinsäure oder Wasserstoffperoxid und Ascorbinsäure, oder kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsäure auch häufig das Natriummetallsalz der Hydroxymethansulfinsäure, Natriumsulfit, Natriumhydrogensulfit und/oder Natriumdisulfit und anstelle von Wasserstoffperoxid tert.-Butylhydroperoxid oder Alkalimetallperoxidsulfate und/oder Ammoniumperoxodisulfate eingesetzt werden. Anstelle eines wasserlöslichen Eisen(II)-salzes wird häufig eine Kombination aus wasserlöslichen FeN-Salzen benutzt. Das Initiatorsystem kann nach Maßgabe seines Verbrauchs im Verlauf der radikalischen wässrigen Emulsionspolymerisation kontinuierlich oder stufenweise zugesetzt werden. Im einzelnen hängt dies in an sich bekannter Weise sowohl von der chemischen Natur des Initiatorsystems als auch von der Polymerisationstemperatur ab. Ganz besonders bevorzugt sind Peroxide, z.B. Alkalimetallperoxodisulfate, wie Natrium- oder Ammoniumperoxodisulfat. Die Zugabe der üblicherweise in Wasser gelösten Radikalinitiatoren in den Polymerisationsreaktor erfolgt in der Regel über einen separaten Zulauf.

Die günstigste Menge an wasserlöslichen Initiatoren kann leicht durch entsprechende Vorversuche ermittelt werden. Üblicherweise werden die wasserlöslichen Initiatoren in einer Menge von 0,1 bis 2,0 Gew.-%, bezogen auf die Gesamtmasse der zu polymerisierenden Monomeren zugegeben.

Darüber hinaus können für die erfindungsgemäße Emulsionspolymerisation noch die bekannten Molekulargewichtsregler, wie Mercaptoverbindungen, wie z.B. tertiäres Dodecylmercaptan oder dimeres α-Methylstyrol, zugegeben werden. Zusätzlich können noch weitere Hilfsmittel wie Komplexierungsmittel, beispielsweise Ethylendiamintetraessigsäure-Na-Salz (EDTA-Na) z.B. für störende Metallionen, Inhibitoren, z.B. Hydrochinonmonomethylether oder Schaumdämpfer der Emulsionspolymerisation zugegeben werden. Die Molekulargewichtsregler und die Hilfsmittel sind bekannt und beispielsweise beschrieben in Houben-Weyl, Methoden der organischen Chemie, Bd. XIV/1, S. 297 ff., 1961, Stuttgart.

Bei der Herstellung der erfindungsgemäß wässrigen Dispersionen ist es wesentlich, dass 15 bis 85 Gew.-%, bevorzugt 30 bis 85 Gew.-%, der insgesamt eingesetzten Emulgatoren innerhalb der Zeit dem Reaktionsgemisch zugegeben werden, in der bis zu 40 %, bevorzugt 35 % des Gesamtumsatzes der Einsatzkomponenten erreicht ist. Die Umsatzrate der Einsatzkomponenten kann leicht durch eine Bestimmung des Feststoffgehaltes der Dispersion mittels einer Eindampfprobe bzw. mittels reaktionscalorimetrischer Messungen bestimmt werden.

In einer besondere Ausgestaltung der erfindungsgemäßen Emulsionspolymerisation zur Herstellung der wässrigen Dispersion von Copolymerisaten kann es von Vorteil sein, bis zu 15 Gew.-% der insgesamt eingesetzten Menge an Emulgatoren gleich zu Beginn der Polymerisation dem Reaktionsgemisch zuzugeben und die restliche Menge, d.h. bis zu 85 Gew.-% der insgesamt eingesetzten Emulgatoren dann innerhalb der Zeit zuzugeben, in der bis zu 40 % des Gesamtumsatzes der Einsatzkomponenten erreicht ist.

Die Dosierrate der Emulgatoren während der Emulsionspolymerisation ist auch abhängig von der angestrebten Teilchengröße der Endpolymere und von der Reaktionsgeschwindigkeit und kann leicht durch einige Vorversuche ermittelt werden. Das Optimum wird dabei durch eine minimale Menge an Ausscheidungen (Koagulat) während der Polymerisation, das Erzielen der gewünschten Endteilchengröße und -verteilung und das Maximum der Stabilität der resultierenden Polymerdispersion gegenüber mehrwertigen Ionen bestimmt.

Die restliche Menge an Emulgatoren, d.h. 85 bis 15 Gew.-% der insgesamt eingesetzten Emulgatoren, kann während der verbleibenden Zeit der Polymerisation dem Reaktionsgemisch zudosiert oder nach Beendigung der Polymerisation der Dispersion zugesetzt werden.

Weiterhin entscheidend für die angestrebten Eigenschaften der wässrigen Dispersion von Copolymerisaten ist die 1 bis 50 %ige Neutralisation der zur Polymerisation eingesetzten copolymerisierbaren Carbonsäuren und/oder Dicarbonsäuren [Monomere c)]. Bevorzugt werden 5 bis 45 % der der zugrundeliegenden Carbonsäuregruppen mit Basen neutralisiert.

Als Basen eignen sich insbesondere wässrige Lösungen von Alkalimetalloxiden oder -hydroxiden, ganz besonders bevorzugt wässrige Ammoniumhydroxid-, Natriumhydroxid- oder Kaliumhydroxidlösungen.

Verfahrenswesentlich ist, dass die Teilneutralisation der den Monomeren c) zugrundeliegenden Carbonsäuregruppen vor der eigentlichen Polymerisationsreaktion erfolgt. Dies erfolgt beispielsweise dergestalt, dass die Carbonsäuremonomeren c) in einem separaten Behälter mit der entsprechenden Menge an Base teilneutralisiert und erst dann der Polymerisation zugeführt werden.

Als vorteilhaft hat es sich erwiesen, wenn die Komponenten a) bis g) dem Polymerisationsreaktor während der Polymerisation über eine gemeinsame Zuführleitung zugeführt werden. In einer Ausführungsform des erfindungsgemäßen Verfahrens werden dabei die Komponenten a) bis g) und wenigstens eine Teilmenge des Wassers während der Zufuhr mittels einer Mischvorrichtung zu einer Emulsion gemischt, wobei die Monomeren c) in der teilneutralisierten Form eingesetzt werden.

Als Mischvorrichtung können in dem erfindungsgemäßen Verfahren einer oder auch mehrere Mischer verwendet werden, wobei es sich um Mischer gleicher oder verschiedener Bauart handeln kann, die in beliebiger Reihenfolge, Anordnung und Kombination verwendet werden, wie z.B. Reihenanordnung aller Mischer, Kombination aus Parallel- und Reihenanordnung oder Parallelanordnung aller Mischer. Werden mehrere Mischer verwendet, so ist die Reihenanordnung bevorzugt.

Geeignete Mischer sind insbesondere dynamische Mischer, deren Mischorgane bewegliche Teile enthalten und statische Mischer, d.h. Mischorgane ohne bewegte Teile im Inneren, die insbesondere nach dem Inline-Prinzip arbeiten.

Geeignete Mischer werden z.B. in A. Echte, Handbuch der technischen Polymerchemie, VCH Verlagsgesellschaft Weinheim, S. 104 ff. (1993) beschrieben.

Geeignete dynamische Inline-Mischer sind z.B. die in ZFL-Zeitschrift für Lebensmitteltechnologie und -Verfahrenstechnik (1982) 33(3), S. 139 ff. beschriebenen Kratzwärmetauscher, nach dem Rotor-Stator-Prinzip arbeitende Zerkleinerungsmaschinen wie z.B. Zahnkranzdispergiermaschinen, Kolloid- und Korundscheibenmühlen sowie Hochdruck- und Ultraschallhomogenisatoren.

Geeignete dynamische Inline-Mischer sind weiterhin Rohrdurchlaufmischer.

Geeignete statische Inline-Mischer sind z.B. die in ZFL-Zeitschrift für Lebensmitteltechnologie und -Verfahrenstechnik (1982) 33(3) S.139 ff. beschrieben, wie z.B. Ross-ISG-Mischer, bei denen der Fluidstrom durch Einbauten mit Bohrungen geführt wird, die ihn in Teilströme zerlegen, die anschließend seitlich versetzt und in anderer Reihenfolge wieder zusammengeführt werden, oder statische Mischer, die mehrere gleichartige, feststehende Mischelemente umfassen, die - jeweils um 90° versetzt - hintereinander in ein Rohr oder einen Kanal eingebaut sind (z.B. Kenics-, Sulzer SMV- und Sulzer SMX-Mischer).

Weitere geeignete statische Inline-Mischer sind Scherspaltmischer, wie die in der EP-B-101 007 beschriebenen Strahldispergatoren.

Weitere geeignete Mischer sind auch Vorrichtungen zur Inline-Emulgierung, wie Membranen, Jet-Mischer, Mischdüsen und gekrümmte, rohrförmige Vorrichtungen mit im wesentlichen kreisförmigem oder ellipsoidem Querschnitt.

Vorzugsweise wird als Mischvorrichtung mindestens ein Inline-Mischer verwendet, der zweckmäßigerweise in der Zuführleitung unmittelbar vor dem Reaktionsgefäß angebracht ist.

Insbesondere bevorzugt umfaßt die Mischvorrichtung einen dynamischen Mischer, einen statischen Mischer und/oder eine Mischdüse. Werden zwei Mischer verwendet, so sind diese in Reihe geschaltet. Als dynamischer Mischer wird dabei vorzugsweise ein Rohrdurchlaufmischer oder eine Zahnkranzdispergiermaschine, z.B. vom Typ Megatron der Fa. Kinematica verwendet.

In einer weiteren Ausführungsform des erfindungsgemäßen Verfahrens werden die Komponenten a) bis g) und wenigstens eine Teilmenge des Wassers während der Zufuhr mittels einer Mischvorrichtung zu einer Emulsion gemischt, wobei jedoch wenigstens eine Teilmenge der zur Teilneutralisation der Monomeren c) erforderlichen Base in die gemeinsame Zuführleitung eindosiert wird. Dabei ist es besonders günstig, wenn wenigstens eine Teilmenge der zur Tellneutralisation der Monomeren c) erforderlichen Base in Strömungsrichtung vor der Mischvorrichtung in die gemeinsame Zuführleitung eindosiert wird. Häufig wird ≥ 50 Gew.-%, ≥ 60 Gew.%, ≥ 70 Gew.-%, ≥ 80 Gew.-%, ≥ 90 Gew.-% oder sogar die Gesamtmenge der zur Teilneutralisation der Monomeren c) erforderlichen Base in Strömungsrichtung vor der Mischvorrichtung in die gemeinsame Zuführleitung eindosiert.

Vorteilhaft werden die Mengenströme der Einzelkomponenten a) bis g), die zur Teilneutralisation der Monomeren c) erforderliche Base sowie das zur Ausbildung einer wässrigen Emulsion benötigte Wasser und gegebenenfalls weitere übliche Zusatzstoffe mengengeregelt der Zuführleitung in Strömungsrichtung vor der Mischvorrichtung zugeführt. Insbesondere durch diese separaten Mengenregelungen der Einzelströme kann das für das erfindungsgemäße Herstellverfahren spezifische Anforderungsprofil, hinsichtlich Emulgatormenge bei vorgegebenem Monomerenumsatz und Teilneutralisation der Monomeren c) in einfacher Weise realisiert werden.

In einer weiteren Ausführungsform des erfindungsgemäßen Verfahrens erfolgt die radikalisch initierte wässrige Emulsionspolymerisation in Anwesenheit einer Polymersaat. Die Menge an Polymersaat beträgt 0,01 bis 2,0 Gew.-Teile, häufig 0,1 bis 1,5 Gew.-Teile und oft 0,1 bis 1,0 Gew-Teile, jeweils bezogen auf 100 Gew.-Teile der Gesamtmonomerenmenge.

Der gewichtsmittlere Teilchendurchmesser der eingesetzten Polymersaat beträgt häufig ≤ 80 nm oder ≤ 60 nm und insbesondere ≤ 50 nm oder ≤ 40 nm. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere D_{w50}-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Vorteilhaft ist es, wenn die verwendete Polymersaat monomodal ist und eine enge Teilchengrößenverteilung aufweist. Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser D_{w50} und zahlenmittleren Teilchendurchmesser D_{N50} [D_{w50}/D_{N50}] ≤ 2,0, bevorzugt ≤ 1,5 und insbesondere bevorzugt ≤ 1,2 oder ≤ 1,1 ist.

Üblicherweise wird die Polymersaat in Form einer wässrigen Polymerdispersion eingesetzt. Die vorgenannten Mengenangaben beziehen sich dabei auf den Polymerfeststoffanteil der wässrigen Polymersaatdispersion; sie sind daher als Gew.-Teile Polymersaatfeststoff, bezogen auf 100 Gew.-Teile Monomere angegeben.

Die Herstellung einer Polymersaat ist dem Fachmann bekannt und erfolgt üblicherweise dergestalt, dass eine relativ kleine Menge an Monomeren sowie eine relativ große Menge an Emulgatoren gemeinsam mit entionisiertem Wasser in einem Reaktionsgefäß vorgelegt und bei Reaktionstemperatur eine ausreichende Menge an Polymerisationsinitiator zugegeben wird.

Erfindungsgemäß bevorzugt wird eine Polymersaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylat-Polymersaat.

Im erfindungsgemäßen Verfahren kann die Gesamt- oder eine Teilmenge der Polymersaat im Polymerisationsreaktor vorgelegt und die gegebenenfalls verbliebene Restmenge im Laufe der Emulsionspolymerisation zugegeben werden. Oft wird die Gesamtmenge an Polymersaat vor Initiierung der Polymerisation im Polymerisationsreaktor vorgelegt.

In einer weiteren Ausführungsform werden wenigstens eine Teilmenge des Wassers und gegebenenfalls Teilmengen einer oder mehrerer der Komponenten a) bis g) sowie Teil- oder Gesamtmengen einer Polymersaat und weiterer üblicher Zusatzstoffe im Polymerisationsreaktor vorgelegt und anschließend die Polymerisation initiiert. Die Zufuhr der gegebenenfalls verbliebenen Restmengen dieser Komponenten beziehungsweise deren Gesamtmengen in den Polymerisationsreaktor erfolgt nach Initiierung der radikalischen Polymerisation, vorzugsweise in die Flüssigphase des Reaktionsgemisches. Hierfür ist es unerheblich, ob die Zufuhr über eine getauchte Zuführleitung erfolgt, deren Auslassöffnung innerhalb der Flüssigphase angeordnet ist, oder ob eine Öffnung des Polymerisationsreaktors im Bereich der Flüssigphase, wie beispielsweise im unteren Bereich der Reaktorwand oder am Reaktorboden, für die Zufuhr verwendet wird.

Wesentlich ist, dass die radikalisch initiierte wässrige Emulsionspolymerisation unter Inertgasatmosphäre, beispielsweise Stickstoff oder Argon erfolgt.

Polymerisationsdruck und Polymerisationstemperatur sind dagegen von eher untergeordneter Bedeutung. Im allgemeinen arbeitet man bei Temperaturen von 20 bis 150 °C, vorzugsweise bei Temperaturen von 60 bis 100 °C.

Nach Beendigung des eigentlichen Polymerisationsverfahrens wird vorzugsweise noch einige Stunden unter Aufrechterhaltung der Polymerisationstemperatur nachgerührt. Daran können sich übliche Maßnahmen zur Restmonomerenentfemung, zur Einstellung des pH-Wertes oder sonstige Methoden zur Endeinstellung bestimmter Eigenschaften anschließen.

Die im erfindungsgemäßen Verfahren eingesetzte Gesamtmenge an entionisiertem Wasser wird derart bemessen, dass die erhaltene wässrige Copolymerisatdispersion einen Polymerisatfeststoffgehalt ≥ 30 und ≤ 70 Gew.-%, häufig ≥ 35 und ≤ 65 Gew.-% und oft ≥ 40 und ≤ 60 Gew.-%, jeweils bezogen auf die wässrige Copolymerisatdispersion aufweist.

Durch das erfindungsgemäße Verfahren sind stabile wässrige Copolymerisatdispersionen auf Basis von konjugierten aliphatischen Dienen und vinylaromatischen Verbindungen zugänglich, welche einen deutlich reduzierten Koagulatgehalt aufweisen. Dadurch werden Produktverluste durch Koagulatbildung reduziert sowie gleichzeitig die Filtrationszeiten verkürzt und die entsprechenden Filterstandzeiten bei der Koagulatabtrennung erhöht.

### Beispiele

### Analytik

Die Feststoffgehalte wurden bestimmt, indem eine aliquote Menge 6 Stunden bei 140 °C in einem Trockenschrank getrocknet wurde. Es wurden jeweils zwei separate Messungen durchgeführt. Der in den jeweiligen Beispielen angegebene Wert stellt den Mittelwert der beiden Messergebnisse dar.

Die Teilchengrößen der Polymersaat wurden nach der Methode der Analytischen Ultrazentrifuge (W. Mächtle, Makromolekulare Chemie, Bd. 185 (1984) Seiten 1025 bis 1039) bestimmt.

Der mittlere Teilchendurchmesser der Copolymerisatteilchen wurde generell durch dynamische Lichtstreuung an einer 0,005 bis 0,01 gewichtsprozentigen wässrigen Dispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die Feinkoagulatgehalte wurden aus der Bestimmung des Siebrückstandes ermittelt, wobei in Abänderung von DIN 53786 jeweils 1 kg der wässrigen Polymerisatdispersion über ein Sieb der Maschenweite 10 µm filtriert wurden. Der Siebrückstand wurde mit entionisiertem Wasser gewaschen, dann 5 Stunden bei 80 °C getrocknet und danach gewogen. Die Angaben erfolgen in Gewichtsteilen Feinkoagulat, bezogen auf eine Million Gewichtsteile wässrige Copolymerisatdispersion (ppm). Es wurden jeweils zwei separate Messungen durchgeführt. Der in den jeweiligen Beispielen angegebene Wert stellt den Mittelwert der beiden Messergebnisse dar.

### Beispiel 1

In einem 150 I Polymerisationsreaktor mit MIG-Rührer wurden bei 20 bis 25 °C (Raumtemperatur)

| | |
|---|---|
| 13,680 kg | entionisiertes Wasser, |
| 0,003 kg | EDTA-Na-Salz (Trilon^{®} B, der Fa. BASF AG, Deutschland) |
| 0,089 kg | einer 28 gew.-%igen wässrigen Lösung des Schwefelsäurehalbester eines ethoxylierten C₁₂-Fettalkohols (mittlerer Ethoxylierungsgrad 2 bis 3; Texapon^{®} NSO der Fa. Cognis Deutschland GmbH & Co. KG) |
| 2,12 kg | eines wässrigen Polymerlatex (hergestellt durch radikalisch initiierte Emulsionspolymerisation von Styrol; Polymerfeststoffgehalt 33 Gew.-%) mit einem gewichtsmittleren Teilchendurchmesser D_{w50} von 30 nm, |
| 0,975 kg | Butadien sowie |

5 Gew.-% der nachfolgend beschriebenen Zuläufe I und II
vorgelegt, unter Rühren (90 U/min) und Stickstoffatmosphäre auf 95 °C erhitzt. Bei Erreichen von 80 °C wurden dem Reaktionsgemisch 1,43 kg einer 7 gew.-% wässrigen Lösung von Natriumperoxodisulfat zugegeben. Bei Erreichen von 95 °C wurden unter Rühren und Beibehaltung der Reaktionstemperatur gleichzeitig beginnend, die Restmengen der Zuläufe I und II sowie die Gesamtmengen der Zuläufe III und IV innerhalb zweieinhalb Stunden mit gleichbleibenden Zulaufströmen zudosiert, wobei der Druck am Ende des Zulaufs auf 9,1 bar (abs.) betrug. Dabei wurden die Zuläufe I, II und III dem Polymerisationsreaktor am Boden über eine gemeinsame Zuführleitung zugeführt. Unmittelbar vor dem Eintritt der Zuführleitung in den Polymerisationsreaktor befand sich ein Megatron-Mischer (Modell MT 36-48 Dex-DW der Fa. Kinmatic Inc.), welcher bei 5000 U/min betrieben wurde. Zulauf IV erfolgte über eine separate Zuführleitung am Boden des Polymerisationsreaktors.

Nach Beendigung der Zuläufe I bis IV wurde noch eineinhalb Stunden bei 95 °C nachpolymerisiert. Danach wurden der wässrigen Copolymerisatdispersion 0,78 kg einer 15 gew.-% wässrigen Ammoniumhydroxid-Lösung zugegeben und weitere 15 Minuten gerührt.

Nach Entspannung des Polymerisationsreaktors auf Atmosphärendruck wurden der wässrigen Copolymerisatdispersion während 2 Stunden über zwei separate Zuführleitungen am Kopf des Polymerisationsreaktors die Zuläufe V und VI zeitgleich beginnend parallel zudosiert. Anschließend kühlte man die wässrige Copolymerisatdispersion auf 60 °C ab und überführte den gesamten Reaktorinhalt über einen 400 µm Beutelfilter in einen Desodorierkessel. Der Filtrationsvorgang benötigte 10 Minuten. Danach wurde bei dieser Temperatur für 3 Stunden und unter weiterem Rühren 4 bar-Wasserdampf am Boden des Desodorierkessels eingeleitet, wobei der austretende Wasserdampf zur Abscheidung von flüchtigen Bestandteilen einem Kühler zugeführt wurde. Dabei mitgerissene wässrige Copolymerisatdispersion wurde abgetrennt und in den Desodorierkessel zurückgeführt. Anschließend wurde die wässrige Copolymerisatdispersion auf Raumtemperatur abgekühlt. Die Menge des im Beutelfilter verbleibenden Siebkoagulats betrug 80 g (feucht). Der Polymerisatfeststoffgehalt betrug 55,5 Gew.-% und die Menge an Feinkoagulat betrug 105 ppm, jeweils bezogen auf die wässrige Copolymerisatdispersion. Die mittlere Teilchengröße wurde zu 140 nm bestimmt.

### Zulauf I ist eine wässrige Lösung hergestellt aus:

| | |
|---|---|
| 16,70 kg | entionisiertem Wasser |
| 0,52 kg | einer 25 gew.-%igen wässrigen Lösung von Natriumhydroxid |
| 1,16 kg | einer 28 gew.-%igen wässrigen Lösung des Texapon^{®} NSO |

### Zulauf II:

| | |
|---|---|
| 28,25 kg | Styrol |
| 2,25 kg | Acrylsäure |
| 0,57 kg | tert.-Dodecylmercaptan |

### Zulauf III:

| | |
|---|---|
| 18,53 kg | Butadien |

### Zulauf IV:

| | |
|---|---|
| 5,71 kg | einer 7 gew.-%igen wässrigen Lösung von Natriumperoxodisulfat |

### Zulauf V:

| | |
|---|---|
| 2,00 kg | einer 5 gew.-%igen wässrigen Lösung von tert.-Butylhydroperoxid |

### Zulauf VI ist eine Reduktionsmittellösung hergestellt aus:

| | |
|---|---|
| 0,10 kg | Natriumbisulfit |
| 0,07 kg | Aceton |
| 1,09 kg | entionisiertes Wasser |

### Vergleichsbeispiel

Beispiel 1 wurde wiederholt mit der Ausnahme, dass Zulauf I über eine Zulaufleitung am Kopf und die Zuläufe II bis IV über eine gemeinsame Zulaufleitung am Boden des Polymerisationsreaktors zugeführt wurden.

Die erhaltene wässrige Copolymerisatdispersion wurde filtriert, wobei für den Filtrationsvorgang 30 Minuten benötigt wurden. Die Siebkoagulatmenge wurde zu 890 g (feucht) bestimmt. Die filtrierte wässrige Copolymersatdispersion wies einen Polymerisatfeststoffgehalt von 54,1 Gew.-% und eine Feinkoagulatmenge von 165 ppm, jeweils bezogen auf die wässrige Copolymerisatdispersion, auf. Die Teilchengröße wurde zu 134 nm bestimmt.

## Patentansprüche

1. Verfahren zur Herstellung einer stabilen wässrigen Copolymerisatdispersion durch radikalisch initiierte wässrige Emulsionspolymerisation von
| | | |
|---|---|---|
| a) | 19,9 bis 80 Gew.-Teilen | konjugierter aliphatischer Diene, |
| b) | 19,9 bis 80 Gew.-Teilen | vinylaromatischer Verbindungen, |
| c) | 0,1 bis 10 Gew.-Teilen | ethylenisch ungesättigter Carbonsäuren und/oder Dicarbonsäuren, |
| d) | 0 bis 20 Gew.-Teilen | ethylenisch ungesättigter Carbonsäurenitrile |
sowie
| | | |
|---|---|---|
| e) | 0 bis 20 Gew.-Teilen | sich von Monomeren b) unterscheidenden copolymerisierbarer Verbindungen, |
wobei die Gesamtmenge der ethylenisch ungesättigten Monomeren a) bis e) 100 Gew.-Teile beträgt, in Gegenwart von Wasser und 0,1 bis 5 Gew.-Teilen Emulgatoren, bezogen auf die Gesamtmonomerenmenge, wobei als Emulgatoren
f) Schwefelsäurehalbester ethoxylierter Fettsäurealkohole und/oder
g) Salze von Estern und Halbestern von Alkylpolyoxyethylensulfosuccinaten
eingesetzt werden, wobei 15 bis 85 Gew.-% der insgesamt eingesetzten Emulgatoren innerhalb der Zeit zugegeben werden, in der bis zu 40 % des Gesamtumsatzes der Monomeren a) bis e) erreicht ist, und wobei 1 bis 50 % der der Monomeren c) zugrundeliegenden Carbonsäuregruppen durch Zusatz von Base neutralisiert werden, **dadurch gekennzeichnet, dass** die Teilneutralisation der Monomeren c) vor der Polymerisation erfolgt.

2. Verfahren nach Anspruch 1, **dadurch gekennzeichnet, dass** die Komponenten a) bis g) dem Polymerisationsreaktor während der Polymerisation über eine gemeinsame Zuführleitung zugeführt werden.

3. Verfahren nach Anspruch 2, **dadurch gekennzeichnet, dass** die Komponenten a) bis g) und wenigstens eine Teilmenge des Wassers während der Zufuhr mittels einer Mischvorrichtung zu einer Emulsion gemischt werden.

4. Verfahren nach Anspruch 3, **dadurch gekennzeichnet, dass** als Mischvorrichtung wenigstens ein statischer, ein dynamischer Mischer und/oder eine Mischdüse verwendet wird.

5. Verfahren nach einem der Ansprüche 2 bis 4, **dadurch gekennzeichnet, dass** wenigstens eine Teilmenge der zur Teilneutralisation der Monomeren c) erforderlichen Base in die gemeinsame Zuführleitung eindosiert wird.

6. Verfahren nach Anspruch 5, **dadurch gekennzeichnet, dass** wenigstens eine Teilmenge der zur Teilneutralisation der Monomeren c) erforderlichen Base in Strömungsrichtung vor der Mischvorrichtung in die gemeinsame Zuführleitung eindosiert wird.

7. Verfahren nach einem der Ansprüche 1 bis 6, **dadurch gekennzeichnet, dass** die radikalisch initierte wässrige Emulsionspolymerisation in Anwesenheit einer Polymersaat durchgeführt wird.

8. Verfahren nach Anspruch 7, **dadurch gekennzeichnet, dass** wenigstens eine Teilmenge des Wassers und gegebenenfalls Teilmengen einer oder mehrerer der Komponenten a) bis g) sowie Teil- oder Gesamtmengen einer Polymersaat oder weiterer üblicher Zusatzstoffe im Polymerisationsreaktor vorgelegt werden und die Zufuhr der Restmengen dieser Komponenten nach Initiierung der radikalischen Polymerisation in die Flüssigphase des Reaktionsgemisches erfolgt.

## Claims

1. A process for preparing a stable aqueous copolymer dispersion by free-radically initiated aqueous emulsion polymerization of
| | | |
|---|---|---|
| a) | from 19.9 to 80 parts by weight of | conjugated aliphatic dienes, |
| b) | from 19.9 to 80 parts by weight of | vinylaromatic compounds, |
| c) | from 0.1 to 10 parts by weight of | ethylenically unsaturated carboxylic acids and/or dicarboxylic acids, |
| d) | from 0 to 20 parts by weight of | ethylenically unsaturated carbonitriles, |
and
| | | |
|---|---|---|
| e) | from 0 to 20 parts by weight of | copolymerizable compounds other than monomers b), |
the total amount of ethylenically unsaturated monomers a) to e) being 100 parts by weight, in the presence of water and from 0.1 to 5 parts by weight, based on the total monomer amount, of emulsifiers comprising
f) sulfuric monoesters of ethoxylated fatty acid alcohols and/or
g) salts of esters and monoesters of alkylpolyoxyethylenesulfosuccinates,
from 15 to 85% by weight of the total emulsifiers used being added within the time taken to reach up to 40% of the total conversion of the monomers a) to e), and from 1 to 50% of the carboxylic acid groups deriving from the monomers c) being neutralized by addition of base, wherein the partial neutralization of the monomers c) takes place before the polymerization.

2. The process according to claim 1, wherein components a) to g) are supplied to the polymerization reactor during the polymerization via a common supply line.

3. The process according to claim 2, wherein components a) to g) and at least part of the water are mixed to an emulsion by a mixing means during their supply.

4. The process according to claim 3, wherein said mixing means comprises at least one static mixer, one dynamic mixer and/or one mixing nozzle.

5. The process according to any of claims 2 to 4, wherein at least part of the base required for partial neutralization of the monomers c) is metered into the common supply line.

6. The process according to claim 5, wherein at least part of the base required for partial neutralization of the monomers c) is metered into the common supply line upstream of the mixing means.

7. The process according to any of claims 1 to 6, wherein the free-radically initiated aqueous emulsion polymerization is conducted in the presence of a polymer seed.

8. The process according to claim 7, wherein at least part of the water and, if appropriate, parts of one or more of components a) to g) and also parts or all of a polymer seed or of further, customary additives are charged to the polymerization reactor and the remainders of these components are supplied to the liquid phase of the reaction mixture after the free-radical polymerization has been initiated.

## Revendications

1. Procédé de préparation d'une dispersion copolymère aqueuse stable par polymérisation aqueuse en émulsion amorcée par voie radicalaire de :
a) 19,9 à 80 parties en poids de diènes aliphatiques conjugués,
b) 19,9 à 80 parties en poids de composés vinylaromatiques,
c) 0,1 à 10 parties en poids d'acides carboxyliques et/ou d'acides dicarboxyliques éthyléniquement insaturés,
d) 0 à 20 parties en poids de nitriles d'acides carboxyliques éthyléniquement insaturés
ainsi que
e) 0 à 20 parties en poids de composés pouvant être copolymérisés, distincts des monomères b),
dans lequel la quantité totale des monomères a) à e) éthyléniquement insaturés est de 100 parties en poids, en présence d'eau et de 0,1 à 5 parties en poids d'émulsifiants, par rapport à la quantité totale de monomères, dans lequel
f) des hémiesters d'acide sulfurique d'alcools éthoxylés d'acide gras et/ou
g) des sels d'esters et d'hémiesters de sulfosuccinates d'alkylpolyoxyéthylène
sont utilisés en tant qu'émulsifiants, dans lequel 15 à 85 % en poids du total des émulsifiants utilisés sont ajoutés dans l'intervalle de temps nécessaire pour atteindre jusqu'à 40 % de la conversion totale des monomères a) à e), et dans lequel 1 à 50 % des groupes acide carboxylique constitutifs des monomères c) sont neutralisés par ajout d'une base, **caractérisé en ce que** la neutralisation partielle des monomères c) a lieu avant la polymérisation.

2. Procédé selon la revendication 1, **caractérisé en ce que** les composants a) à g) sont amenés au réacteur de polymérisation pendant la polymérisation par une conduite d'alimentation commune.

3. Procédé selon la revendication 2, **caractérisé en ce que** les composants a) à g) et au moins une quantité partielle de l'eau sont mélangés pendant l'alimentation au moyen d'un dispositif de mélange pour donner une émulsion.

4. Procédé selon la revendication 3, **caractérisé en ce qu'**au moins un mélangeur statique, un mélangeur dynamique et/ou une buse de mélange sont utilisés comme dispositif de mélange.

5. Procédé selon l'une quelconque des revendications 2 à 4, **caractérisé en ce qu'**au moins une quantité partielle de la base nécessaire pour la neutralisation partielle des monomères c) est introduite de manière dosée dans la conduite d'alimentation commune.

6. Procédé selon la revendication 5, **caractérisé en ce qu'**au moins une quantité partielle de la base nécessaire pour la neutralisation partielle des monomères c) est introduite de manière dosée dans le sens du courant avant le dispositif de mélange dans la conduite d'alimentation commune.

7. Procédé selon l'une quelconque des revendications 1 à 6, **caractérisé en ce que** la polymérisation aqueuse en émulsion amorcée par voie radicalaire est effectuée en présence d'un polymère en grains.

8. Procédé selon la revendication 7, **caractérisé en ce qu'**au moins une quantité partielle de l'eau et éventuellement des quantités partielles d'un ou de plusieurs des composants a) à g), ainsi que des quantités totales ou partielles d'un polymère en grains ou d'autres additifs usuels sont mises en place dans le réacteur de polymérisation et l'alimentation des quantités résiduelles de ces composants a lieu après amorçage de la polymérisation par voie radicalaire dans la phase liquide du mélange réactionnel.
